# DEMANDE DE BREVET EUROPEEN

(11) **EP 1 245 476 A1**
(43) Date de publication de la demande: **02.10.2002**
(21) Numéro de dépôt: 02290810.7
(22) Date de dépôt: 29.03.2002
(51) Int. Cl.: B62D 21/02, B62D 21/12, B62D 21/16, B62D 21/03, B62D 21/17, B62D 25/20, B62D 53/06

(54) **Véhicule industriel modulaire**

(30) Priorité: 30.03.2001 FR 0104371; 30.03.2001 FR 0104372; 30.03.2001 FR 0104373; 30.03.2001 FR 0104374; 30.03.2001 FR 0104375; 30.03.2001 FR 0104376; 30.03.2001 FR 0104377
(71) Demandeur: General Trailers France, 91130 Ris Orangis (FR)
(72) Inventeur: Mertz, Pascal, 55500 Ligny en Barrois (FR)
(74) Mandataire: Catherine, Alain

(57) **Abrégé**

L'invention concerne un véhicule industriel construit selon un concept modulaire. Un tel véhicule comprend un module central (1), un module avant (2) et un module d'essieu (3), ainsi qu'au moins un module complémentaire tel un module de bordures de rive (4), un module de traverse avant (5) ou un module de traverse arrière (6) ou encore un second module avant.

## Description

L'invention concerne un véhicule industriel tel qu'une remorque, une semi-remorque ou un véhicule spécialement conçu pour une application particulière.

La plupart des véhicules industriels sont conçus selon un principe commun: un châssis constitué de deux longerons reliés entre eux par des traverses repose sur un ou plusieurs essieux dont la disposition est caractéristique pour les familles de véhicules industriels énoncées ci-dessus, c'est-à-dire un essieu à l'avant et au moins un essieu à l'arrière pour les remorques à avant-train, au moins un essieu pour les remorques à essieu central ou essieux centraux, pas d'essieu à l'avant et au moins un essieu à l'arrière pour les semi-remorques et un ou plusieurs essieux non exclusivement attribué à ce véhicule, ni à l'avant, ni à l'arrière, pour les véhicules spécialement conçus pour des applications particulières. Chacun des essieux arrière peut être indifféremment un essieu fixe, un essieu auto-vireur ou un essieu directeur, et éventuellement relevable. L'essieu avant des remorques à avant-train est orientable moyennant un rond à billes et une flèche pourvue d'un anneau d'attelage.

Dans le cas des semi-remorques, l'avant du véhicule industriel est équipé d'une cheville ouvrière permettant l'attelage du véhicule industriel à un tracteur, ainsi que de deux béquilles extensibles permettant de dételer le véhicule. Sur des véhicules spécialement conçus pour une application particulière, le principe de l'attelage moyennant une cheville ouvrière peut s'appliquer aux deux extrémités du véhicule. Dans ce cas, l'une des deux extrémités, ou même les deux, peut être fixée sur un train roulant indépendant (appelé aussi " bogie ") ayant lui-même un ou deux éléments d'attelage pour recevoir, de manière permanente ou de manière détachable, la (ou les) cheville(s) ouvrière.

Les châssis de ces véhicules industriels sont par ailleurs conçus de façon à pouvoir recevoir toutes sortes d'équipement ou de carrosserie selon la nature de la matière à transporter. Ainsi, le châssis peut être par exemple porteur d'une citerne, d'un fourgon, d'une caisse frigorifique, d'une benne, d'un plateau ou d'une structure porteuse d'une bâche.

Afin de pouvoir répondre aux différentes configurations souhaitées par leurs clients, les constructeurs de véhicules industriels conçoivent leurs véhicules de façon à pouvoir les obtenir à partir d'un ou de quelques composants ou sous-ensembles de base auxquels sont ajoutés différents équipements.

Toutefois, une grande variété de véhicules industriels engendre des frais de gestion industrielle et de fabrication importants, et cela aussi bien sur le plan de l'achat des composants que celui du temps et des coûts de fabrication proprement dits.

Aussi, le but de l'invention est de proposer un véhicule industriel dont la conception permet à la fois de proposer une grande diversité de types de véhicule industriel et d'obtenir une simplification de la fabrication et une optimisation de son coût.

Le but de l'invention est atteint par un véhicule industriel ayant un châssis et des moyens permettant son déplacement, le véhicule comprenant au moins un module central, un module avant et un module d'essieux, les modules central et avant constituant le châssis, et l'ensemble des modules du véhicule industriel étant assemblés moyennant des éléments de fixation distincts démontables tels des boulons, des rivets ou tout autre élément transperçant.

Conformément à l'invention, le véhicule industriel comprend en outre au moins un autre module tel un module de bordures de rive, un module de traverse avant ou un module de traverse arrière ou encore un second module avant, celui-ci étant alors disposé à l'extrémité arrière et orienté inversement par rapport au premier module avant.

A titre d'exemple, une semi-remorque comprend, en plus des modules central et avant, des modules supplémentaires permettant de l'équiper de différents types de carrosserie, choisis selon l'utilisation prévue de la semi-remorque. L'ensemble de ces modules choisis est ainsi constitué par un module de traverse avant destiné à intégrer l'interface avec la carrosserie, un module avant destiné à intégrer la fonction d'attelage, un module central comprenant des longerons et des traverses constitutifs de la plus grande partie du châssis du véhicule industriel, un module arrière destiné à intégrer un pare-chocs et l'interface carrosserie, un module d'essieux comprenant un ou plusieurs essieux et des éléments de suspension, et un module de bordures de rive destiné à constituer une interface latérale entre le châssis et les différents types de carrosserie.

Les modules énoncés ci-dessus, désignés selon leur fonction principale et/ou selon leur disposition par rapport à l'avant et l'arrière du véhicule, sont assemblés en fonction de la configuration souhaitée du véhicule industriel.

Les différents modules sont assemblés par boulonnage ou rivetage ou par montage moyennant tout autre élément démontable transperçant, mais exempt de soudage. L'assemblage par soudage est réservé à ce qui est appelé ici l'assemblage à l'intérieur de chacun de ces modules.

La renonciation au soudage pour l'assemblage des modules entre eux apporte au moins deux avantages. Le premier est celui que chacun des modules peut être amené sur le lieu d'assemblage dans sa position d'utilisation. Il n'est donc plus nécessaire, par exemple, de présenter le châssis en position renversée afin de pouvoir y souder les éléments de fixation nécessaires au montage de la cheville ouvrière, de l'essieu ou des essieux, de la suspension, des réservoirs de freinage, et de tout autre équipement nécessaire pour la sécurité du véhicule. En conséquence, il n'est plus nécessaire non plus, selon l'invention, de retourner le châssis équipé, après avoir effectué les différentes soudures, et notamment de prévoir à cet effet un équipement de type vireur pour retourner le châssis.

Le deuxième avantage est celui de ne pas avoir besoin, pour la partie assemblage de la fabrication des véhicules industriels, de personnel particulièrement qualifié pour la soudure selon les critères de sécurité de la construction et de la sécurité routière des véhicules industriels.

Un autre avantage encore est celui de ne plus nuire à la protection anticorrosion que l'on applique aux composants constitutifs du véhicule industriel avant de les assembler, et plus particulièrement lors de leur fabrication. En effet, chacun des composants et sous-ensembles à assembler est pourvu des perforations nécessaires pour la mise en place de boulons, de rivets ou d'autres éléments de fixation transperçant. Il n'y a donc pas d'altération de la protection de surface de ces éléments ni d'altération de leurs propriétés mécaniques et métallurgiques résultant du soudage.

Par ailleurs, puisque la plupart des mesures anticorrosion, par exemple la cataphorèse, implique le traitement de ces éléments dans un bain, il paraît évident qu'il est plus facile de traiter un élément ou un module qu'un véhicule entier.

Le concept modulaire du véhicule industriel selon l'invention permet par ailleurs de simplifier l'assemblage du véhicule industriel et d'améliorer en même temps la protection de certains éléments contre des agressions par infiltration ou gravillonnage. A titre d'exemple, nous citons ici la protection des câbles et des conduits : grâce au concept modulaire selon l'invention, ils peuvent être posés par le haut et notamment dans des parties de profilés servant en même temps de protection.

Le concept modulaire selon l'invention permet aussi de concevoir chacun des modules de manière que les efforts qu'il subit soient mieux repris à l'intérieur du module et que les contraintes soient mieux définies selon leur nature et leur amplitude, afin de pouvoir les transmettre d'un module à l'autre, de façon à augmenter notablement la tenue mécanique du véhicule industriel.

Encore un autre avantage de l'invention est celui d'une meilleure réparabilité des véhicules industriels. Lorsque l'on constate une usure particulière d'une partie du véhicule ou lorsque ce véhicule a subi un accident, la réparation peut se limiter au module concerné. De plus, les modules étant assemblés moyennant des éléments de fixation démontables, le démontage s'effectue sans oxycoupage et, de même, le remontage se fait sans soudure.

Le véhicule modulaire de l'invention peut être complété de diverses façons soit par un ou plusieurs modules supplémentaires, soit par ajout d'éléments complétant l'un au moins des différents modules.

Une première possibilité de compléter le véhicule modulaire de l'invention est constituée par le montage d'au moins un tube d'entretoisement entre les longerons du châssis.

Avantageusement, le tube (ou les tubes) d'entretoisement, qui est (sont) fixé(s) entre les longerons par des boulons, des rivets ou tout autre élément démontable transperçant, constitue(nt) un (ou des) réservoir(s) d'air comprimé destiné(s) à alimenter le système de freinage, mais pouvant être utilisé(s) aussi - en fonction secondaire - pour alimenter tout système additionnel.

Ainsi, le module d'essieux peut être équipé d'un réservoir d'air comprimé, avant montage de celui-ci sur le châssis.

Avantageusement, le tube d'entretoisement est pourvu de deux mains de suspension.

Une deuxième possibilité de compléter le véhicule modulaire de l'invention concerne les traverses reliant les longerons du châssis.

Dans les véhicules réalisés jusqu'à maintenant, les longerons du châssis sont reliés entre eux par des traverses disposées entre les longerons et soudées sur ceux-ci. A l'extérieur des longerons, respectivement à droite et à gauche, ces traverses sont prolongées par des profilés également soudés sur les longerons. Les extrémités libres de ces profilés sont reliées entre elles par un profilé longitudinal ayant la fonction d'une bordure de rive respectivement droit et gauche. Selon d'autres constructions, les traverses s'étendent sur toute la largeur du châssis et traversent donc les longerons. La soudure de structures portantes d'un véhicule routier nécessite d'avoir du personnel particulièrement qualifié pour ce type de soudures et de mettre en place des modes opératoires de soudage. De plus, la soudure ne peut souvent pas être faite au poste de montage, ce qui entraîne alors le transport des éléments à souder vers un poste de soudage et ensuite le retour de l'ensemble soudé vers le lieu d'assemblage. Enfin, lorsque les traverses s'étendent sur toute la largeur du châssis et sont soudées sur les bords de rive, tout remplacement d'une traverse nécessite un oxycoupage préalable entier d'une des bordures de rive et l'oxycoupage de la traverse concernée à l'autre bordure de rive.

Aussi, cette deuxième possibilité de compléter le véhicule modulaire de l'invention consiste à utiliser des traverses constituées par une traverse principale disposée entre les longerons et des traverses auxiliaires disposées de part et d'autre à l'extérieur des longerons. Les traverses auxiliaires prolongent ainsi les traverses principales correspondantes et chaque traverse auxiliaire est reliée à une extrémité correspondante d'une traverse principale à travers le longeron au moyen d'au moins deux éléments de fixation.

Ces deux éléments de fixation sont avantageusement un dispositif d'indexage ou de fixation rapide et au moins un boulon, un rivet ou tout autre élément démontable transperçant.

Les traverses principales disposées entre les longerons sont pourvues, dans des parties plates transversales formées à leurs extrémités, d'au moins deux ouvertures. Selon une première disposition, l'ouverture supérieure, vue dans la position d'utilisation du châssis, est une ouverture ronde destinée au passage d'un boulon ou d'un rivet. L'ouverture inférieure est alors soit une ouverture ronde soit une ouverture allongée orientée horizontalement dans la position de montage de la traverse, selon le type de dispositif d'indexage utilisé. Chacun des longerons est pourvu d'ouvertures correspondantes aux endroits prévus pour la fixation des traverses. Les traverses partielles extérieures présentent dans une partie plate formée à l'extrémité venant en appui sur le longeron, une ouverture circulaire destinée au passage du boulon. Cette ouverture est située de façon à ce que la traverse partielle extérieure puisse constituer, pour le moins en ce qui concerne sa surface supérieure, un prolongement de la traverse principale.

Les traverses partielles extérieures comprennent par ailleurs, sur l'extrémité destinée à être attachée au longeron, un crochet, une goupille ou tout autre moyen d'indexage adapté dont les dimensions sont choisies de façon à ce que, lors du montage, la traverse partielle puisse être accrochée ou tenue provisoirement à travers les ouvertures allongées du longeron et de la traverse. Lorsque la traverse partielle est pourvue d'un crochet, celui-ci serre la traverse principale contre le longeron lorsque la traverse partielle extérieure est dans sa position finale de montage.

Selon une seconde disposition, l'ouverture supérieure est une ouverture allongée orientée horizontalement dans la position de montage de la traverse et l'ouverture inférieure est alors une ouverture ronde.

Le crochet ou la goupille, d'une part, et l'ouverture allongée, d'autre part, forment ensemble le dispositif d'indexage ou de fixation rapide, quelle que soit la disposition des ouvertures.

Une troisième possibilité de compléter le véhicule de l'invention est constitué, pour un châssis comportant des longerons, par la disposition des longerons de façon qu'une aile supérieure de chacun des longerons dépasse du niveau supérieur des traverses tout en définissant un espace entre cette aile supérieure et ce niveau supérieur. Cet espace est destiné à recevoir les câbles et/ou les conduits, et le plancher est formé par des éléments disposés de part et d'autre de chacune des ailes supérieures des longerons.

En effet, il s'est avéré que les câbles et conduits nécessaires au fonctionnement de l'équipement du véhicule, ne sont pas toujours à l'abri des risques d'endommagement par des projections venant de la route ou par des éléments de fixation tels des vis introduites dans le plancher.

Cette disposition de l'invention permet à la fois de pallier les inconvénients des dispositions antérieures et de faciliter le montage des câbles et conduits par la possibilité de les poser par le haut.

Une quatrième possibilité de compléter le véhicule de l'invention est constitué, pour un châssis comportant des longerons, par un élément allongé central disposé entre les longerons dans une zone d'extrémité du châssis, l'élément allongé étant à la fois moins large à l'extrémité du châssis qu'à la fin de la zone d'extrémité et solidaire des longerons sur toute sa longueur.

En effet, il s'est avéré que la répartition des contraintes que le châssis d'un véhicule industriel subit lors de son déplacement et notamment lors de changements de direction, doit être améliorée si l'on veut utiliser des structures plus légères comme châssis.

L'élément allongé apporte l'avantage particulier que les contraintes de traction, notamment transversales, sont introduites dans le châssis par une structure évolutive permettant de diffuser les efforts du dispositif d'accouplement à la sellette d'attelage du tracteur vers les longerons. Cette structure tient donc mieux compte que les structures utilisées avant l'invention, de la répartition des lignes de force. Il en résulte également une meilleure répartition des efforts à l'interface entre des modules avant et central.

Une cinquième possibilité de compléter le véhicule de l'invention consiste à pourvoir chacun des modules d'un châssis modulaire comprenant au moins deux modules, dans une zone de jonction de ces modules, d'un ensemble de perforations disposées de façon que les axes d'une première partie de ces perforations sont orientés perpendiculairement aux axes de l'autre partie de ces perforations. Pour la plupart des jonctions, cela signifie qu'une partie des perforations servant à l'assemblage des modules est orientées verticalement et l'autre partie est orientée horizontalement.

Une sixième possibilité de compléter le véhicule de l'invention est constitué, pour un châssis comportant des longerons et des traverses, par le fait que les longerons ont une section transversale asymétrique.

D'autres caractéristiques et avantages de l'invention ressortiront de la description d'exemples de réalisation d'un véhicule industriel selon l'invention donnée ci-après en référence aux dessins.

Dans ces dessins,

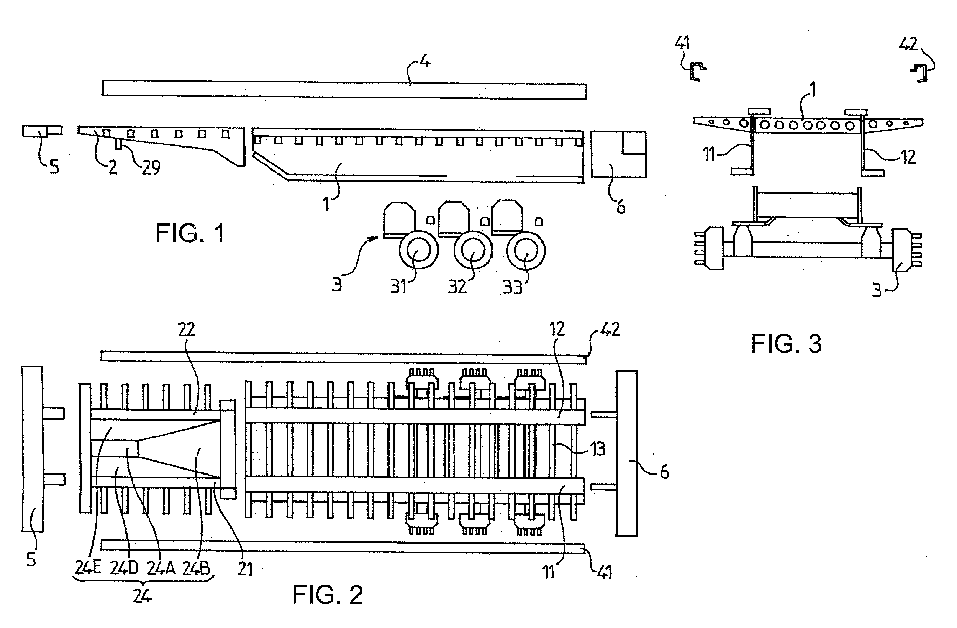

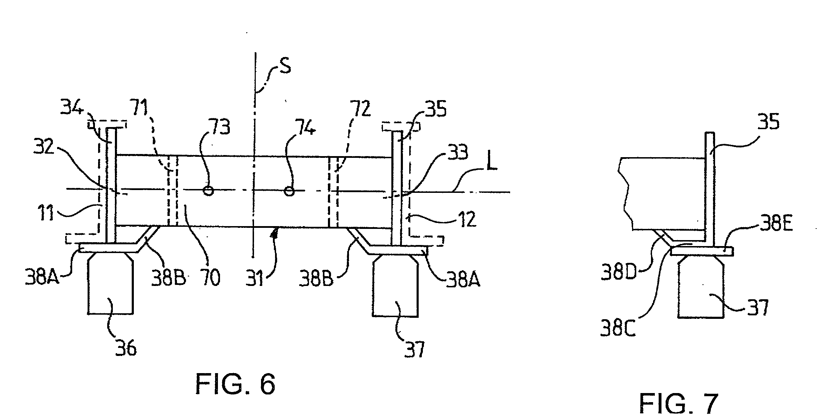

les Figures 1 à 5 représentent, de manière schématique et non limitative, en une vue dite éclatée, la disposition des modules d'un véhicule industriel selon l'invention; et les Figures 6 à 20 représentent, également de manière schématique et non limitative, quelques caractéristiques supplémentaires par lesquelles, considérées isolément ou en toute combinaison techniquement possible, le véhicule de l'invention peut être complété.

Plus particulièrement:
la Figure 1 montre la disposition modulaire en une vue latérale,
la Figure 2 montre la disposition modulaire en une vue de dessus,
la Figure 3 montre la disposition modulaire en une vue arrière,
les Figures 4 et 5 montrent le concept modulaire de l'invention en des vues latérales respectivement d'un véhicule spécial et d'une remorque,
la Figure 6 montre un tube d'entretoisement selon l'invention,
la Figure 7 montre un détail du tube de la Fig. 6,
la Figure 8 montre la disposition d'un longeron et de traverses selon l'invention dans une vue en perspective,
la Figure 9 montre schématiquement une étape du montage d'une traverse selon l'invention,
la Figure 10 montre la traverse de la Figure 10 dans sa position finale de montage sur un longeron,
les Figures 11 et 12 montrent schématiquement des variantes du montage de la Figure 10,
la Figure 13 montre en une vue en coupe transversale le plateau selon l'invention.
la Figure 14 montre, en une vue en perspective, l'extrémité avant du châssis de la Figure 2,
la Figure 15 montre, en une perspective différente, un détail du châssis de la Figure 2,
la Figure 16 montre l'assemblage de deux longerons selon l'invention,
la Figure 17 montre le semi-encastrement des modules assemblés,
la Figure 18 montre un longeron en perspective, et
les Figures 19 et 20 montrent le longeron de la Figure 18 en section transversale.

Le premier mode de réalisation d'un véhicule industriel selon l'invention, représenté sur les Figures 1 à 3, est une semi-remorque. Cette semi-remorque comprend un module central 1, un module avant 2, un module d'essieux 3 constituant un train roulant, un module de bordures de rive 4, un module de traverse avant 5 et un module de traverse arrière 6.

Le module central 1 est constitué de deux longerons 11, 12 et de traverses 13 réparties de manière à peu près homogène sur toute la longueur du module central. Il est précisé pour l'ensemble du présent texte que les termes "longueur" et "largeur" désignent les dimensions du véhicule industriel ou d'un de ses modules dans le sens de la marche du véhicule ou par rapport à cette direction.

Le module avant 2 comprend des éléments longitudinaux 21, 22 destinés à prolonger les longerons 11, 12 vers l'avant lorsque le module avant 2 est assemblé avec le module central 1. Le module avant 2 comprend par ailleurs un élément allongé central 24 obtenu, à partir d'une tôle, par exemple par emboutissage ou hydroformage. Cet élément 24 s'étend essentiellement sur deux plans parallèles, à savoir une partie centrale comprenant une partie rectangulaire 24A et une partie trapézoïdale 24B s'étendant le long d'un plan supérieur et des parties latérales 24D et 24E s 'étendant le long d'un plan inférieur. La jonction entre les deux parties est avantageusement située proche de, ou en, un point se trouvant au-dessus de la cheville ouvrière.

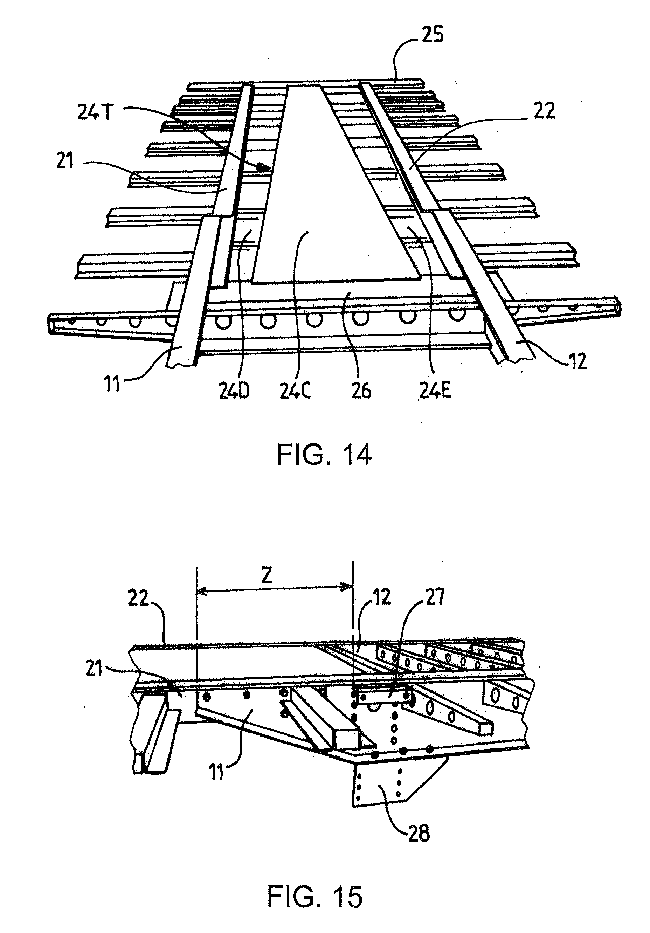

Selon une variante référencée 24T, la partie centrale de l'élément allongé est entièrement formé comme un trapèze référencé 24C. L'élément 24T est représenté sur la Figure 14 et décrit en détail dans la partie correspondante de la présente description. Le module avant 2 sert, entre autres, à la fixation d'une cheville ouvrière 29 moyennant laquelle la semi-remorque est attelée à un tracteur.

Le module d'essieux 3 comprend trois essieux (31, 32, 33), des mains de suspension et des éléments de suspension tels que, par exemple, des coussins d'air. Il va sans dire que la réalisation du concept modulaire selon l'invention n'est pas limitée à un tel ensemble d'essieux, mais qu'il comprend également des réalisations avec un essieu unique et avec un groupe de deux essieux et que ces essieux peuvent être fixes, auto-vireurs ou directeurs. De même, un au moins des essieux peut être relevable.

La cheville ouvrière 29 du module avant 2 et le module d'essieux 3 forment ensemble des moyens permettant le déplacement du véhicule industriel.

Le module de bordures de rive 4 comprend essentiellement deux profilés 41, 42. Ces profilés s'étendent sur toute la longueur de l'ensemble du module central 1 et du module avant 2. Ces profilés sont formés de façon à pouvoir servir non seulement comme bordures latérales d'un plateau monté sur le châssis, mais également pour recevoir des moyens de fixation et d'arrimage de différentes natures selon l'équipement du véhicule industriel.

Le module de traverse avant 5 est destiné à former l'extrémité avant du véhicule industriel. Il s'étend sur toute la largeur du véhicule industriel, y compris sur les extrémités avant des profilés 41, 42. La traverse avant 5 constitue, par exemple, la base d'une face avant de la carrosserie d'un fourgon construit selon le concept modulaire de l'invention.

Le module de traverse arrière 6 s'étend sur toute la largeur du module central 1 et les profilés du module de bordures de rive 4. Le module de traverse arrière sert, par exemple, comme base pour une face arrière d'une carrosserie montée sur le châssis. Le module de traverse arrière 6 peut également constituer la base sur laquelle est monté un hayon-élévateur.

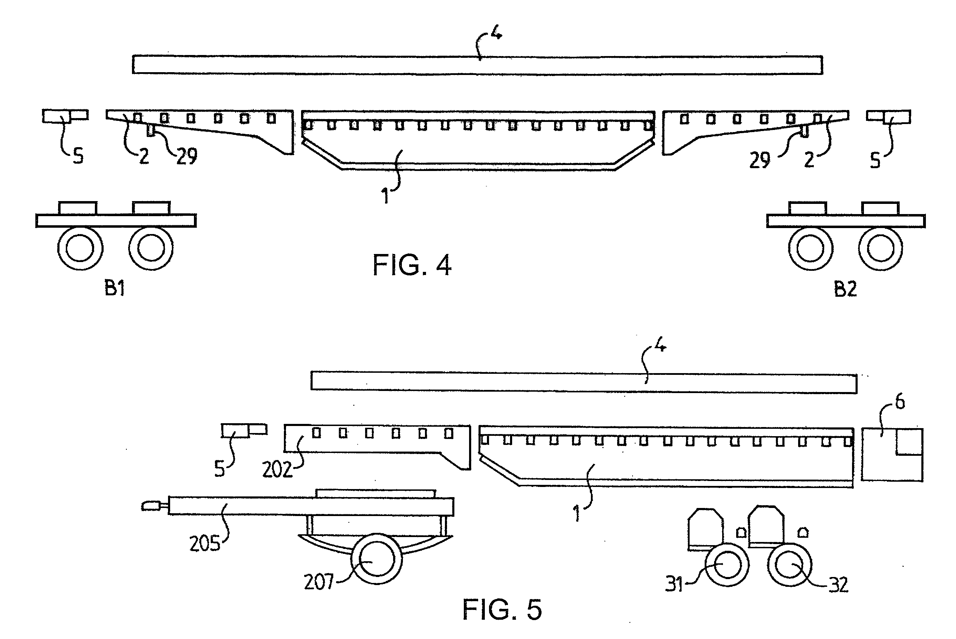

La Figure 4 représente, en tant que deuxième mode de réalisation de l'invention, un véhicule industriel spécialement conçu pour une application particulière. Ce véhicule comprend un châssis correspondant en grande partie au châssis de la semi-remorque représentée sur les Figures 1 à 3, et deux trains roulant B1 et B2 sous la forme de bogies sur lesquels le châssis est attaché moyennant des chevilles ouvrières 29. Chacune des deux extrémités du véhicule est constituée par un module avant 2 sur lequel est monté un module de traverse avant 5.

Les modules avant 2 sont montés sur le module central 1 qui correspond essentiellement à celui représenté sur la Figure 1. Il en diffère uniquement en ce que les deux extrémités du module central sont formées de la même manière afin de pouvoir être assemblées avec les modules 2.

La Figure 5 représente, à titre de troisième mode de réalisation de l'invention, une remorque dont la plupart des modules correspondent à ceux de la semi-remorque représentée sur les Figures 1 à 3. En remplacement du module avant 2 de la semi-remorque vient ici un module avant 202 comprenant, outre des éléments longitudinaux et des traverses, un avant-train 207 avec un rond à billes et une barre d'attelage 205 (également appelée flèche) pourvue d'un anneau d'attelage, pour l'attelage de la remorque à un véhicule tracteur. La barre d'attelage 205, l'avant-train 207 et le module d'essieux avec les essieux 31, 32 forment ensemble des moyens permettant le déplacement du véhicule industriel.

Les différents modules énoncés ci-dessus sont formés de façon à pouvoir être attachés l'un à l'autre moyennant des boulons, des rivets ou tout autre moyen démontable. A cet effet, les différentes parties des modules sont pourvues, dans des sections destinées à la jonction de deux modules avoisinants entre eux, de perçages accessibles horizontalement et verticalement afin de rendre possible l'assemblage des différents modules sans avoir besoin de retourner le module avant l'assemblage ni de le retourner de nouveau après assemblage pour le mettre dans sa position d'utilisation.

Comme le montre la Figure 6, chacun des essieux du module 3 comprend un tube d'entretoisement de châssis 31 dont les deux extrémités 32 et 33 sont pourvues chacune de deux flasques 34, 35 constitué par des éléments plats, évidés en leur centre de façon à présenter un trou dont le diamètre correspond au diamètre extérieur du tube d'entretoisement. Les flasques 34, 35 sont glissés sur les extrémités du tube d'entretoisement 31 et soudés sur ce dernier moyennant des soudures circonférentielles.

Les deux flasques 34 et 35 sont prolongés à la fois transversalement par rapport à un axe longitudinal L du tube d'entretoisement 31 et parallèlement et symétriquement par rapport à un plan médian S défini transversalement par rapport à l'axe L du tube d'entretoisement 31, par des mains de suspension 36, 37. La main de suspension 36 est attachée au flasque 34, et de la même façon la main de suspension 37 au flasque 35, par un profil angulaire ayant une partie plate 38A destinée à être disposé horizontalement et une autre partie plate 38B formant un angle avec la partie plate horizontale 38A. Le flasque 34, le profil angulaire 38A, 38B et la main de suspension 36 sont soudés ensemble. La partie plate 38B, qui remonte donc vers le tube d'entretoisement 31, entoure ce dernier partiellement par en dessous et est soudée sur le tube d'entretoisement.

Selon une variante de réalisation du tube d'entretoisement, représenté sur la Figure 7, le flasque 34 et, de manière symétrique, le flasque 35 sont formés avec des retours vers le plan de symétrie S du tube d'entretoisement. Ces retours sont constitués par une partie plate 38C perpendiculaire au plan du flasque 34 ou 35. Dans la position d'utilisation de l'essieu, ces parties 38C sont horizontaux. Par ailleurs, les parties 38C sont prolongées par une partie 38D, essentiellement plate elle-même et orientée de façon à former un angle avec la partie 38C correspondante. L'extrémité libre des parties 38D entoure le tube d'entretoisement partiellement et est soudé sur celui-ci.

Selon la variante de réalisation représentée sur la Figure 7, la main de suspension 36 comprend un flasque 38E qui, lorsque la main de suspension est montée sur le flasque 34 ou 35, est orientée parallèlement à la partie plate 38C du retour et y est attaché moyennant des boulons.

Il est rappelé ici pour l'ensemble du texte que les explications de l'invention sont données principalement en présentant des fixations par boulons. Toutefois, et de manière équivalente dans le cadre de la présente invention, toutes les fixations peuvent également être effectuées moyennant des rivets.

Le tube d'entretoisement 31 décrit jusqu'ici intègre à la fois la fonction de support de main de suspension et de gabarit de fabrication pour la disposition des longerons 11, 12 du châssis.

Selon un mode de réalisation préféré de l'invention, le tube d'entretoisement 31 intègre par ailleurs aussi une fonction de réservoir d'air comprimé, comme le montre la Figure 6. Le tube d'entretoisement 31 comprend un réservoir 70 délimité par la paroi cylindrique du tube 31 et deux cloisonnements 71, 72 disposés à l'intérieur du tube d'entretoisement 31. Les cloisonnements sont disposés symétriquement par rapport au plan médian de l'essieu qui correspond au plan de symétrie S du tube d'entretoisement 31, et à une distance de chacune des deux extrémités 32, 33 du tube d'entretoisement 31. La distance axiale des cloisons 71, 72 et le diamètre intérieur du tube définissent le volume du réservoir 70.

Selon une variante, le réservoir 70 peut être constitué par un tube réservoir ou tout autre corps cylindrique dont le diamètre extérieur correspond approximativement au diamètre intérieur du tube d'entretoisement 31 et dont les extrémités sont fermées par des cloisonnements correspondant aux cloisonnements 71, 72 décrits ci-dessus. La réalisation de la fonction réservoir à air comprimé intégré à l'intérieur du tube d'entretoisement par un réservoir indépendant donne la possibilité de choisir deux matériaux différents pour le réservoir et le tube d'entretoisement ou de réaliser le réservoir avec une paroi double. Toutefois, pour la plupart des applications, le tube d'entretoisement constitue lui-même la paroi du réservoir 70.

Selon une autre variante encore, le tube d'entretoisement peut être revêtu sur sa paroi extérieure d'une couche en un matériau apportant une protection particulière ou supplémentaire au réservoir d'air, tout comme il est également possible de revêtir le tube d'entretoisement à l'intérieur pour le protéger contre les effets d'humidité que la condensation et l'air comprimé pourraient engendrer.

Le tube d'entretoisement selon l'invention est par ailleurs pourvu d'au moins deux raccords ou embouts 73, 74 dont l'un sert au raccordement du réservoir 70 à un compresseur et dont l'autre sert au raccordement du réservoir 70 au circuit de freinage de l'essieu ou à des appareils ou dispositifs additionnels actionnés moyennant de l'air comprimé.

Le châssis dont une partie est représentée sur la Figure 2 est constitué par deux longerons 11, 12 et des traverses 13. Les traverses 13 sont constituées par une traverse principale 13A et des traverses partielles extérieures 13B appelées par la suite traverses auxiliaires 13B. Les traverses 13A sont pourvues, à leurs extrémités destinées à être attachées aux longerons 11 et 12, d'une face plate 131 venant en appui sur la surface correspondante de l'âme 111 du longeron 11 et d'une face plate semblable venant en appui sur la surface correspondante de l'âme du longeron 12. Dans chacune de ces faces plates sont pratiquées une ouverture circulaire 13C et une ouverture allongée 13D. Les ouvertures 13C et 13D sont disposées de façon que, lorsque la traverse principale 13A est dans sa position d'utilisation dans le châssis, l'ouverture 13C constitue l'ouverture supérieure et l'ouverture 13D constitue l'ouverture inférieure.

Par ailleurs, la traverse auxiliaire 13B est pourvue, à l'extrémité destinée à être montée sur le longeron 11 ou 12, d'une face plate 132 venant en appui sur la surface correspondante de l'âme 111 du longeron 11 ou de l'âme du longeron 12. Dans la face plate 132, est pratiquée une ouverture 13E. La disposition de l'ouverture 13E sur la traverse auxiliaire 13B correspond à l'ouverture 13C de la traverse principale 13A. De plus, la traverse auxiliaire 13B est pourvue d'un crochet 13F formé d'un seul tenant avec la traverse. Le crochet 13F, qui représente de façon symbolique et non limitative un moyen d'indexation, et des ouvertures pratiquées à une position appropriée dans l'âme du longeron et la traverse principale, constituent un dispositif d'indexage ou de fixation rapide.

Le crochet 13F a une forme essentiellement rectangulaire et ses dimensions sont choisies de façon telle qu'il puisse traverser, lors de l'assemblage de la traverse auxiliaire 13B avec la traverse principale 13A, les ouvertures correspondantes du longeron 11 ou 12 et de la traverse principale 13A. Lorsque la traverse principale 13A et la traverse auxiliaire correspondante 13B sont mise en place, un boulon 13G est inséré dans les ouvertures 13C, 13E et serré.

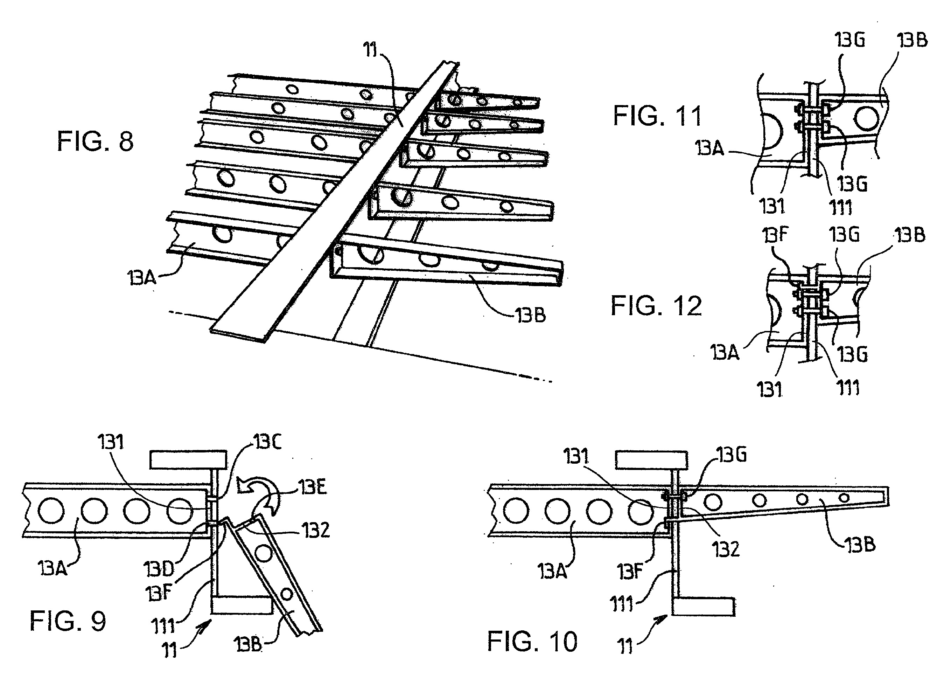

Selon une variante des dispositions de fixation décrites ci-dessus, les traverses auxiliaires sont attachées par deux boulons 13G (voir Figure 11). Dans ce cas, les deux ouvertures sont des ouvertures circulaires.

Selon une autre variante, la disposition de l'ouverture destinée au passage d'un boulon et la disposition de l'ouverture allongée destinée au passage du crochet sont inversées de façon que le crochet prenne la position supérieure et le boulon ou les boulons 13G (voir Figure 12), la position ou des positions inférieures. Toutefois, pour des raisons de tenue mécanique, notamment sous charge, la première version, c'est-à-dire la disposition du crochet dans la position inférieure, sera en général préférée.

Selon encore une autre variante, la traverse auxiliaire est pourvue d'un crochet disposé en position supérieure et tourné vers le haut (voir Figure 12 ; donc à l'opposé du crochet 13F représenté sur les Figures 9 et 10), et de deux orifices juxtaposés ou superposés et en position inférieure, pour le passage de deux boulons pour la fixation de la traverse auxiliaire. Selon cette disposition, le crochet sert essentiellement à la mise en position de montage de la traverse. La traverse principale et le longeron ont des ouvertures correspondantes.

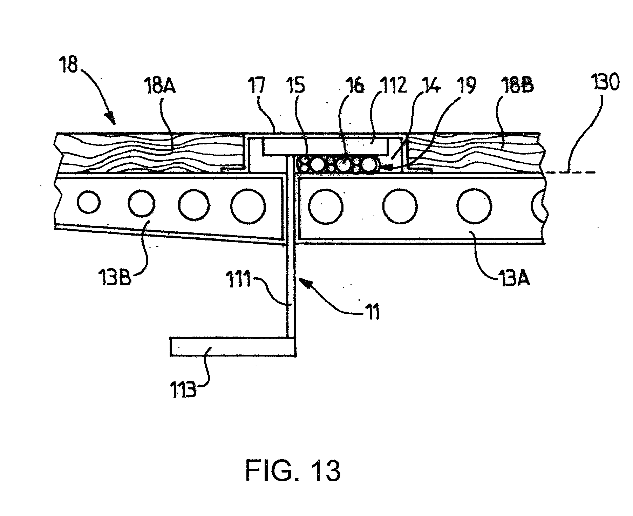

La Figure 13 représente, en une coupe transversale simplifiée, une partie d'un plateau selon l'invention, et plus particulièrement la jonction entre un longeron 11 et une traverse 13 d'un tel plateau. Le longeron 11 comprend une âme 111, une aile supérieure 112 et une aile inférieure 113, les deux ailes s'étendant dans des plans perpendiculaires à un plan de symétrie de l'âme 111. L'aile supérieure 112 est disposée excentrée par rapport au plan de symétrie de l'âme 111. Ainsi, la plus grande partie de l'aile 112 est disposée d'un côté dudit plan de l'âme 111 : sur le côté droit dans la représentation de la Figure 13. Contrairement à cela, l'aile inférieure 113 s'étend entièrement du côté opposé par rapport à l'étendue de la plus grande partie de l'aile 112, c'est-à-dire sur le côté gauche dans la représentation de la Figure 13.

Pour le châssis, cette disposition des longerons signifie que la plus grande partie des ailes supérieures des longerons 11, 12 est orientée vers l'intérieur du châssis alors que les ailes inférieures de ces longerons s'étendent entièrement vers l'extérieur du châssis. En raison de la géométrie de leur section transversale, ce type de longeron est appelé aussi un longeron en Z.

La traverse 13 est constituée par une traverse principale 13A et deux traverses auxiliaires 13B dont la Figure 13 ne représente qu'une. Alors que la traverse principale 13A est montée entre les deux longerons du châssis, les traverses auxiliaires sont montées sur les côtés extérieurs des longerons. Les faces supérieures 130 des traverses principales 13A et des traverses auxiliaires 13B définissent ensemble un plan par rapport auquel est mesuré l'épaisseur d'un plancher 18 destiné à être fixé sur le châssis.

Comme cela est représenté sur la Figure 13, les traverses 13A et 13B sont attachées au longeron 11 à un niveau tel que le longeron dépasse du plan défini par les faces supérieures 130 des traverses 13A et 13B tout en définissant un espace 14 entre l'aile supérieure 112 du longeron 11 et la face supérieure 130 de la traverse principale 13A. Cet espace 14 est destiné à recevoir des câbles 15 et des tuyaux ou conduits 16 faisant partie de l'équipement du véhicule industriel.

Avantageusement, mais non nécessairement, un profilé appelé " Oméga coiffant " en raison de sa forme et de son utilisation et référencé 17, est disposé sur la partie supérieure du longeron 11. Selon la réalisation représentée sur la Figure 13, les dimensions du profilé 17 sont choisies de façon que ce profilé repose, avec des parties correspondantes de celui-ci, à la fois sur les faces supérieures respectives des traverses 13A et 13B et sur l'aile supérieure 112 du longeron 12. Ainsi, le profilé 17 n'aura pas de charge à supporter à lui seul, puisqu'il est soutenu par le longeron 11.

Adjacent au profilé 17 et de part et d'autre de celui-ci, des éléments 18A et 18B faisant partie du plancher 18 sont disposés sur les traverses 13A et 13B. La hauteur des éléments de plancher 18A et 18B est choisie en fonction de la hauteur du profilé 17 afin de présenter un plancher sensiblement sans dénivellement. En même temps, les éléments 18A et 18B assurent l'étanchéité du plancher 18 du fait qu'ils s'appuient sur les parties latérales du profilé " Oméga coiffant ".

Grâce à cette disposition de l'invention, les câbles 15 et tuyaux 16 peuvent être disposés dans un espace bien défini aussi bien en ce qui concerne ses dimensions que son étendue à l'intérieur du plateau. En effet, la hauteur de l'espace 14 c'est-à-dire la distance entre la face inférieure de l'aile 112 et la face supérieure de la traverse 13B est déterminée par le niveau de montage des traverses par rapport aux longerons, la largeur de l'espace 14 est déterminée par la distance entre l'âme 111 du longeron 11 et le bord de l'élément 18B avoisinant du plancher 18 et l'étendue ou l'orientation de l'espace 14 est déterminée par l'orientation du longeron. Cette disposition, qui peut s'appliquer aussi bien en alternative que simultanément au longeron 12, définit donc un canal bien déterminé et facile à repérer sur la surface supérieure du plateau.

Le principe d'une disposition de câbles et/ou de tuyaux dans un espace ou canal bien déterminé selon la présente invention, peut être appliquée à tous types de châssis, qu'ils soient modulaires ou non.

L'efficacité de cette disposition de l'invention peut encore être améliorée lorsque la hauteur de l'espace 14 est bien adaptée à la configuration particulière des câbles et conduits pour un véhicule industriel donné et lorsque les câbles et conduits sont disposés à l'intérieur d'une gaine 19 et que cet ensemble de câbles et conduits gainé est logé dans cet espace 14.

Le châssis représenté partiellement sur la Figure 14 comprend un élément allongé central 24T obtenu par pliage ou par hydroformage. Cet élément 24T s'étend entre, et est solidaire de, une première traverse d'entretoisement 25 et une seconde traverse d'entretoisement 26 spécialement prévues à cet effet. La traverse d'entretoisement 25 est disposée à l'extrémité avant du module avant 2 et la traverse d'entretoisement 26 est disposée à l'extrémité arrière du module avant 2. L'élément central 24T est un élément essentiellement plat qui comprend une partie centrale 24C s'étendant le long d'un plan supérieur et deux parties latérales 24D, 24E s'étendant de part et d'autre de la partie centrale, le long d'un plan inférieur, parallèle au plan supérieur. La largeur de la partie centrale 24C mesurée à l'extrémité avant, par exemple à la jonction avec la traverse 25, est inférieure à la largeur de la partie centrale mesurée à l'extrémité arrière, par exemple à la jonction avec la traverse 26. L'élément central 24T est attaché latéralement aux longerons 21 et 22 par des entretoises 26.

Selon le mode de réalisation représenté sur la Figure 14, la partie centrale de l'élément central 24T est réalisée en une seule partie trapézoïdale 24C, alors que le mode de réalisation représenté sur la Figure 2 comprend une partie essentiellement rectangulaire 24A et une partie essentiellement trapézoïdale 24B.

La Figure 15 montre en une vue en perspective la jonction entre le module avant 2 et le module central 1. Plus particulièrement, cette figure montre des équerres 27, 28 fixées sur les longerons 11, 12 à la fin de la zone de jonction Z entre les longerons 21, 22 du module avant 2 et les longerons 11, 12 du module central 1. Les équerres 27, 28 sont destinées au montage de béquilles destinées au support du châssis, et donc du véhicule industriel, lorsque ce dernier est en stationnement sans être attelé.

Conformément à la conception modulaire du véhicule industriel de la présente invention, les différents modules sont formés de façon à pouvoir être attachés les uns aux autres moyennant des boulons ou des rivets. A cet effet, les différentes parties des modules sont pourvues, dans des sections destinées à la jonction de deux modules avoisinants entre eux, de perçages accessibles horizontalement et verticalement afin de rendre possible l'assemblage des différents modules sans avoir besoin de retourner le module avant l'assemblage et de le retourner de nouveau après assemblage pour le mettre dans sa position d'utilisation.

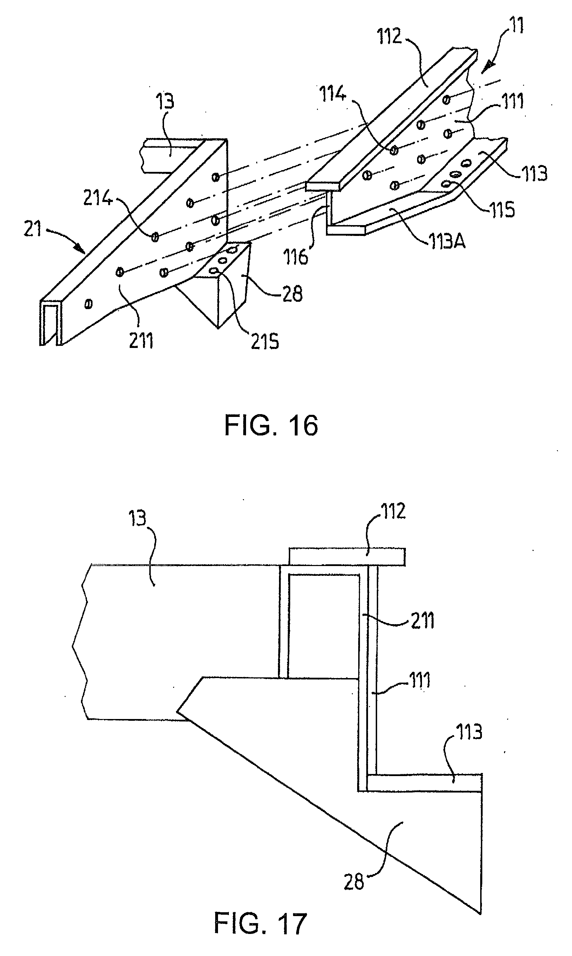

La Figure 16 montre schématiquement en une vue éclatée les extrémités respectivement du longeron 21 du module avant 2 et du longeron 11 du module central 1, qui sont destinés à être assemblés par des boulons ou des rivets.

Avantageusement mais non exclusivement, la zone de jonction s'étend essentiellement dans la zone de réduction de la hauteur des longerons. Dans cette zone, la hauteur de l'âme 111 du longeron 11 considérée cette fois-ci de l'arrière du longeron vers l'avant, reste constante jusqu'à une certaine distance de l'extrémité libre 116 du longeron 11 et se réduit ensuite jusqu'à cette extrémité 116. Alors que l'aile supérieure 112 reste à un niveau constant, l'aile inférieure 113 s'étend, dans ces deux zones de jonction, d'abord parallèlement à l'aile 112 et s'étend ensuite en oblique sous la forme de l'aile 113A vers l'extrémité 116. Dans la zone de jonction, l'âme 111 est pourvue de perforations horizontales 114 et l'aile 113, exclusivement dans la partie parallèle à l'épaule 112, est pourvue de perforations verticales 115. En variante, les perforations 115 peuvent être pratiquées dans l'aile supérieure 112 ou encore dans les deux ailes 112 et 113. Dans l'extrémité du longeron 21 destinée à être fixée sur le longeron 11, et dans une partie horizontale de l'équerre 28, des perforations correspondantes 214, 215 sont pratiquées.

La disposition des perforations 114, 115 et 214 et 215 est choisie de façon à assembler les longerons 11 et 21 par un ensemble de boulons ou de rivets dont les axes sont orientés horizontalement et verticalement dans la position d'utilisation du châssis. Cette disposition est choisie afin de donner à l'assemblage des longerons la plus grande tenue mécanique dans les situations principales de chargement, c'est-à-dire dans la situation de surcharge lorsque le véhicule est stationné et dans une situation mixte où se superposent les efforts de la charge (donc du poids) et les efforts de ripage (dans un virage).

Avantageusement, la stabilité au ripage obtenue par l'assemblage décrit ci-dessus, des longerons, peut être augmentée encore par l'utilisation de tubes d'entretoisement à la place de simples traverses pour relier les longerons entre eux.

Par ailleurs, la disposition des perforations horizontales 114, 214 et verticales 115, 215 rend possible de réunir par un seul montage les extrémités de jonction des modules central et avant et les béquilles du châssis.

La Figure 17 montre le semi-encastrement du module avant 2 sous les longerons, ici sous le longeron 11, et la disposition de l'équerre 28 qui entoure une partie du longeron 11 et permet de fixer les béquilles.

Les différents modules énoncés ci-dessus sont formés de façon à pouvoir être attachés les uns aux autres moyennant des boulons, des rivets ou tout autre élément démontable qui traverse les parties venant en appui l'une sur l'autre, des modules à assembler.

A cet effet, les différentes parties des modules sont pourvues, dans des sections destinées à la jonction de deux modules avoisinants entre eux, de perçages accessibles horizontalement et verticalement afin de rendre possible l'assemblage des différents modules sans avoir besoin de retourner le module avant l'assemblage et de le retourner de nouveau après assemblage pour le mettre dans sa position d'utilisation.

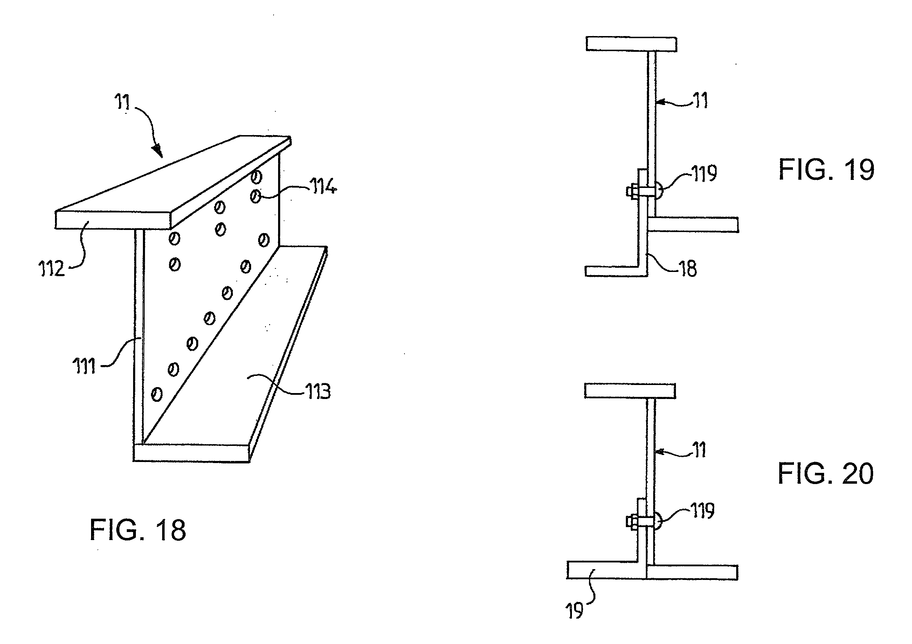

La Figure 18 représente schématiquement un longeron 11 formé à partir d'un profilé en Z. Ce longeron 11 comprend une âme 111, une aile supérieure 112 et une aile inférieure 113. Les ailes 112 et 113 s'étendent perpendiculairement par rapport à un plan défini par l'âme 111. Toutefois, les ailes supérieure 112 et inférieure 113 ne s'étendent pas symétriquement de part et d'autre de l'âme 111.

Au contraire, l'aile 112 s'étend essentiellement sur un côté à partir de l'âme 111. Une variante d'un longeron ainsi configuré pourrait être un longeron en J dont uniquement l'aile supérieure s'étendrait sensiblement symétriquement des deux côtés de l'âme 111.

L'aile inférieure 113 s'étend dans une direction opposée à celle de la plus grande étendue de l'aile 112.

La section asymétrique du longeron permet de réduire la masse du longeron tout en améliorant sa tenue mécanique notamment au ripage.

Par ailleurs, le longeron 11, et plus particulièrement l'âme 111, est pourvu d'un certain nombre de perforations 114 dont les axes sont parallèles entre eux et s'étendent perpendiculairement au plan de l'âme 111. Le pré-perçage des longerons permet une plus grande modularité des châssis et des véhicules industriels ayant un tel châssis.

La disposition de l'invention permet, comme le montrent les Figures 19 et 20, de fabriquer des châssis dans l'optique d'une plus grande modularité, et cela aussi bien en ce qui concerne la combinaison des modules entre eux que leur équipement avec des accessoires.

A titre d'exemple, la Figure 19 montre la fixation d'une cornière 18 destinée à servir comme support pour la fixation d'accessoires.

Et, la Figure 20 montre la fixation d'un profilé 20 destiné au montage, par exemple, d'une console, d'un caisson d'outillage ou d'un coussin d'air de la suspension pneumatique du véhicule.

## Revendications

1. Véhicule industriel ayant un châssis et des moyens permettant son déplacement, le véhicule comprenant au moins un module central (1), un module avant (2) et un module d'essieux (3), les modules central (1) et avant (2) constituant le châssis, et l'ensemble des modules (1-6) du véhicule industriel étant assemblés moyennant des éléments de fixation distincts démontables tels que des boulons ou des rivets, **caractérisé en ce qu'**il comprend en outre au moins un autre module tel un module de bordures de rive (4), un module de traverse avant (5) ou un module de traverse arrière (6) ou encore un second module avant, celui-ci étant alors disposé à l'extrémité arrière et orienté inversement par rapport au premier module avant.

2. Véhicule selon la revendication 1, **caractérisé en ce que** le module avant (2) est pourvu d'une cheville ouvrière (29).

3. Véhicule selon la revendication 1, **caractérisé en ce que** le module avant (202) comprend une barre d'attelage (205), la barre d'attelage (205) et un module d'essieu (3) formant les moyens permettant le déplacement du véhicule industriel.

4. Véhicule selon la revendication 3, **caractérisé en ce que** le module avant (202) comprend également un avant-train (207), les moyens permettant le déplacement du véhicule comprenant également l'avant-train (207).

5. Véhicule selon l'une quelconque des revendications 1 à 4, le châssis comprenant deux longerons (11, 12) reliés entre eux par des traverses (13), et au moins un tube d'entretoisement (31) de châssis monté entre les longerons (11, 12), **caractérisé en ce que** le tube d'entretoisement (31) constitue un réservoir (70) d'air comprimé.

6. Véhicule selon l'une quelconque des revendications 1 à 4, le châssis comportant des longerons (11, 12) et des traverses (13), chacune des traverses (13) étant constituée par une traverse principale (13A) disposée entre les longerons (11, 12) et deux traverses auxiliaires (13B) disposées de part et d'autre à l'extérieur des longerons, les traverses auxiliaires (13B) prolongeant les traverses principales (13A) correspondantes, **caractérisé en ce que** chaque traverse auxiliaire (13B) est reliée à une extrémité correspondante d'une traverse principale (13A) à travers le longeron et uniquement au moyen d'éléments de fixation (13F, 13G) traversant le longeron.

7. Véhicule selon la revendication 6, **caractérisé en ce que** les éléments de fixation (13F, 13G) comprennent un dispositif d'indexage ou de fixation rapide (13F).

8. Véhicule selon l'une quelconque des revendications 1 à 4, les véhicules ayant un plateau destiné à être équipé de câbles (15) et/ou de conduits (16) tels des tuyaux pneumatiques, le plateau étant constitué essentiellement par un châssis comportant des longerons (11, 12) et des traverses (13) constitués par des profilés ayant une âme (111) et deux ailes (112, 113) dont une aile supérieure (112), et un plancher (18) formé sur ce châssis, le châssis étant formé de façon que l'aile supérieure (112) de chacun des longerons dépasse du niveau supérieur (130) des traverses, et le plancher (18) étant formé par des éléments (18A, 18B) disposés de part et d'autre de chacune des ailes supérieures (112) des longerons (11, 12), **caractérisé en ce que** l'aile supérieure (112) définit un espace (14) entre cette aile supérieure (112) et ce niveau supérieur (130), cet espace (14) étant destiné à recevoir les câbles (15) et/ou les conduits (16).

9. Plateau selon la revendication 8, **caractérisé en ce que** l'espace (14) destiné à loger les câbles (14) et/ou les conduits (15) et l'aile supérieure (112) du longeron (11) sont coiffés d'un profilé (17).

10. Véhicule selon l'une quelconque des revendications 1 à 4, dont le châssis, à au moins une de ses extrémités, n'est pas solidaire d'un train roulant, le châssis comportant des longerons (11, 12, 21, 22) et des traverses (13) reliant les longerons entre eux, **caractérisé en ce que** le châssis comprend un élément allongé central (24) essentiellement plat, comprenant une partie centrale (24C) s'étendant le long d'un plan supérieur et deux parties latérales (24D, 24E) s'étendant de part et d'autre de la partie centrale le long d'un plan inférieur, l'élément central (24) s'étendant entre les longerons (21, 22) dans une zone d'extrémité du châssis et étant à la fois moins large à l'extrémité du châssis qu'à la fin de la zone d'extrémité et solidaire des longerons (21, 22) sur toute sa longueur.

11. Véhicule selon l'une quelconque des revendications 1 à 4, dont le châssis comprend au moins deux modules (1, 2) chacun comprenant deux longerons (11, 12, 21, 22) et des traverses, **caractérisé en ce que** les modules (1, 2) à assembler sont pourvus, dans une zone de jonction (Z), de perforations (114, 115, 214, 215), une partie des perforations (114, 214) étant orientée perpendiculairement à l'autre partie des perforations (115, 215).

12. Véhicule selon la revendication 11, **caractérisé en ce que** les perforations (114, 115, 214, 215) sont pratiquées dans les longerons (11, 12, 21, 22) des modules à assembler, des perforations horizontales (114, 214) étant pratiquées dans l'âme (111, 211) des longerons (11, 12, 21, 22) et des perforations verticales (115, 215) étant pratiquées dans au moins une des ailes (113) des longerons (11, 12) de l'un des modules à assembler et dans des parties correspondantes (28) de l'autre module.

13. Véhicule selon l'une quelconque des revendications 1 à 4, dont le châssis comporte des longerons (11, 12) et des traverses (13), les longerons (11, 12) ayant une section transversale asymétrique, **caractérisé en ce que** chaque longeron (11, 12) comprend une aile supérieure (112) dont la plus grande partie s'étend d'un côté d'une âme (111) du longeron, et une aile inférieure (113) s'étendant entièrement de l'autre côté de l'âme (111) du longeron.
